(19)

Europäisches
Patentamt
European
Patent Office
Office européen
des brevets

(11) **EP 4 468 501 A1**

(12) **EUROPEAN PATENT APPLICATION**
published in accordance with Art. 153(4) EPC

(43) Date of publication:
**27.11.2024 Bulletin 2024/48**

(21) Application number: **23747358.2**

(22) Date of filing: **26.01.2023**

(51) International Patent Classification (IPC):
*H01M 50/409* (2021.01)   *H01M 50/403* (2021.01)
*H01M 50/446* (2021.01)   *H01M 50/449* (2021.01)
*H01M 10/052* (2010.01)

(52) Cooperative Patent Classification (CPC):
**H01M 10/052; H01M 50/403; H01M 50/409;**
**H01M 50/446; H01M 50/449;** Y02E 60/10

(86) International application number:
**PCT/KR2023/001222**

(87) International publication number:
**WO 2023/146317 (03.08.2023 Gazette 2023/31)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **26.01.2022 KR 20220011687**

(71) Applicant: **LG Chem, Ltd.**
**Yeongdeungpo-gu**
**Seoul 07336 (KR)**

(72) Inventors:
• **LEE, A-Young**
  **Daejeon 34122 (KR)**
• **LEE, Joo-Sung**
  **Daejeon 34122 (KR)**
• **KIM, Bong-Tae**
  **Daejeon 34122 (KR)**
• **MUN, Sung Cik**
  **Daejeon 34122 (KR)**
• **LEE, Ji-Myeong**
  **Daejeon 34122 (KR)**
• **HAN, Sung-Jae**
  **Daejeon 34122 (KR)**

(74) Representative: **Hoffmann Eitle**
**Patent- und Rechtsanwälte PartmbB**
**Arabellastraße 30**
**81925 München (DE)**

(54) **SEPARATOR FOR AN ELECTROCHEMICAL DEVICE AND ELECTROCHEMICAL DEVICE CONTAINING THE SAME**

(57)    Provided is a separator for an electrochemical device, including a polymer porous support, and an inorganic composite porous layer formed on at least one surface of the porous support, wherein the inorganic composite porous layer includes a binder polymer and an inorganic filler, the binder polymer includes a first binder polymer and a second binder polymer, the first binder polymer is an amorphous polymer having a glass transition temperature (Tg) of 180°C or higher, and the second binder polymer is a polyvinylidene fluoride-based copolymer.

FIG. 1a

EP 4 468 501 A1

**Description**

TECHNICAL FIELD

The present disclosure relates to a separator for an electrochemical device and an electrochemical device including the same.

The present application claims priority to Korean Patent Application No. 10-2022-0011687 filed on January 26, 2022 in the Republic of Korea, the disclosures of which are incorporated herein by reference.

BACKGROUND ART

Recently, energy storage technology has been given an increasing attention. Efforts into research and development for electrochemical devices have been actualized more and more, as the application of energy storage technology has been extended to energy for cellular phones, camcorders and notebook PCs and even to energy for electric vehicles. Particularly, development of secondary batteries as energy storage systems rechargeable based on the electrochemical principle has been focused. More recently, active studies have been conducted about designing a novel electrode and battery in order to improve the capacity density and specific energy in developing such batteries.

Particularly, a lithium-ion secondary battery is a repeatedly usable battery in which lithium ions reciprocate between the positive electrode and the negative electrode to store and generate electricity. The lithium-ion secondary battery is characterized in that it shows a high voltage and energy density, long cycle life and high preservability and provides a high output. Therefore, the application fields of such a lithium secondary battery have been expanded diversely to a portable IT instrument, a battery for electric vehicles, an energy storage system (ESS), or the like. Among such application fields, distribution of electric vehicles is the main key to the secondary battery growth and is a major growth engine of the secondary battery market.

The main four constitutional elements forming such a secondary battery are a positive electrode, a negative electrode, an electrolyte and a separator. Among them, the separator functions to isolate both electrodes, i.e. the positive electrode and the negative electrode, from each other to interrupt an electrical short-circuit caused by a physical contact between both electrodes, and to provide a channel through which ions can move between both electrodes through the electrolyte supported in micropores, thereby imparting ion conductivity.

Such a separator includes a microporous polymer film material having the above-mentioned functions, and particularly, a polyolefin-based separator has been used widely. Typical examples of the polyolefin-based separator include a polyethylene (PE)- or polypropylene (PP)-based polymer material.

The methods for forming such a microporous structure may be broadly classified into a dry process based on an orientation step and a wet process based on an extraction step, and a dry separator or wet separator is used depending on the required characteristics.

Meanwhile, in the case of the application of a wet separator using polyolefin to a secondary battery, the separator undergoes a meltdown phenomenon, when the temperature of the battery increases to a temperature higher than the melting point of polyolefin, thereby causing the problems, such as ignition and explosion, related with poor heat resistance. To solve this, there has been developed a method for coating the separator surface with inorganic particles and a polymer binder. Since a ceramic coated safety reinforced separator (SRS) as a part of such development was applied to a lithium-ion secondary battery for electric vehicles, it has become the standard of heat resistant separator technology. To obtain such a separator, use of a wet separator which facilitates thickness thinning has led the market.

As a method for manufacturing such a wet separator, there has been studied and developed a method of coating a dry film with a polymer binder through a dipping phase separation process which is a non-solvent induced phase separation (NIPS) process.

In the case of such a method, there is an advantage in that the separator can be formed into a thin film and is favorable in terms of resistance. However, the issue of generation of microvoids or macrovoids has been raised due to a decrease in packing density depending on the composition and process.

DISCLOSURE

Technical Problem

The present disclosure is designed to solve the problems of the related art, and therefore the present disclosure is directed to providing a separator for an electrochemical device which ensures safety at a high temperature, while showing excellent adhesion.

The present disclosure is also directed to providing a method for manufacturing a separator using a dipping phase separation process, the method providing a separator for an electrochemical device which ensures safety at a high temperature, while showing excellent adhesion.

It will be easily understood that the objects and advantages of the present disclosure may be realized by the means shown in the appended claims and combinations thereof.

Technical Solution

The inventors of the present disclosure have found that the above-mentioned problems can be solved by the separator for an electrochemical device, an electrochemical device including the same and the method for manufacturing the same as described hereinafter.

According to the first embodiment of the present disclosure, there is provided a separator for an electrochemical device, including a polymer porous support, and an inorganic composite porous layer formed on at least one surface of the porous support,

> wherein the inorganic composite porous layer includes a binder polymer and an inorganic filler,
> the binder polymer includes a first binder polymer and a second binder polymer,
> the weight ratio of the first binder polymer to the second binder polymer is 6:4-9: 1,
> the first binder polymer is an amorphous polymer having a glass transition temperature (Tg) of 180°C or higher,
> the second binder polymer is a polyvinylidene fluoride-based copolymer containing a first repeating unit derived from vinylidene fluoride (VdF) and a second repeating unit derived from hexafluoropropylene (HFP), and
> the content of the second repeating unit is 4-40 wt% based on the total weight of the polyvinylidene fluoride-based copolymer.

According to the second embodiment of the present disclosure, there is provided the separator for an electrochemical device as defined in the first embodiment, wherein the weight ratio of the first binder polymer to the second binder polymer is 6:4-7:3.

According to the third embodiment of the present disclosure, there is provided the separator for an electrochemical device as defined in the first or the second embodiment, wherein the content of the second repeating unit is 4-15 wt% based on the total weight of the polyvinylidene fluoride-based copolymer.

According to the fourth embodiment of the present disclosure, there is provided the separator for an electrochemical device as defined in any one of the first to the third embodiments, wherein the inorganic composite porous layer has a porosity of 70% or more.

According to the fifth embodiment of the present disclosure, there is provided the separator for an electrochemical device as defined in any one of the first to the fourth embodiments, wherein the first binder polymer includes polyimide (PI), polyamideimide (PAI), polyetherimide (PEI), polyphenylsulfone (PPSU), polyethersulfone (PES), polysulfone (PSU), or two or more of them.

According to the sixth embodiment of the present disclosure, there is provided the separator for an electrochemical device as defined in any one of the first to the fifth embodiments, wherein the inorganic filler is primary particles having an average particle diameter of 20-700 nm.

According to the seventh embodiment of the present disclosure, there is provided the separator for an electrochemical device as defined in any one of the first to the sixth embodiments, wherein the inorganic filler includes alumina ($Al_2O_3$), fumed alumina, aluminum hydroxide ($Al(OH)_3$), magnesium hydroxide ($Mg(OH)_2$), boehmite (AlOOH), or two or more of them.

According to the eighth embodiment of the present disclosure, there is provided the separator for an electrochemical device as defined in any one of the first to the seventh embodiments, wherein the inorganic composite porous layer further includes a dispersant in an amount of 3 parts by weight or less based on 100 parts by weight of the inorganic composite porous layer.

According to the ninth embodiment of the present disclosure, there is provided the separator for an electrochemical device as defined in the eighth embodiment, wherein the dispersant is polyvinyl pyrrolidone (PVP).

According to the tenth embodiment of the present disclosure, there is provided an electrochemical device including a positive electrode, a negative electrode and a separator interposed between the positive electrode and the negative electrode, wherein the separator is the same as defined in any one of the first to the ninth embodiments.

According to the eleventh embodiment of the present disclosure, there is provided the electrochemical device as defined in the tenth embodiment, which is a lithium secondary battery.

According to the twelfth embodiment of the present disclosure, there is provided a method for manufacturing the separator for an electrochemical device as defined in any one of the first to the ninth embodiments, including the steps of:

> (S1) preparing a polymer porous support;
> (S2) applying a slurry containing a binder polymer, an inorganic filler and a solvent to at least one surface of the polymer porous support; and

(S3) dipping the polymer porous support coated with the slurry in a composition containing a non-solvent, followed by drying, to form an inorganic composite porous layer,

wherein the binder polymer includes a first binder polymer and a second binder polymer,

the weight ratio of the first binder polymer to the second binder polymer is 6:4-9: 1,

the first binder polymer is an amorphous polymer having a glass transition temperature (Tg) of 180°C or higher,

the second binder polymer is a polyvinylidene fluoride-based copolymer containing a first repeating unit derived from vinylidene fluoride (VdF) and a second repeating unit derived from hexafluoropropylene (HFP), and

the content of the second repeating unit is 4-40 wt% based on the total weight of the polyvinylidene fluoride-based copolymer.

According to the thirteenth embodiment of the present disclosure, there is provided the method for manufacturing the separator for an electrochemical device as defined in the twelfth embodiment, wherein the solvent is an organic solvent.

According to the fourteenth embodiment of the present disclosure, there is provided the method for manufacturing the separator for an electrochemical device as defined in the twelfth or the thirteenth embodiment, wherein the non-solvent includes water, methanol, ethanol, propyl alcohol, butyl alcohol, butanediol, ethylene glycol, propylene glycol, tripropylene glycol, acetone, tetrahydrofuran, methylene chloride, chloroform, dimethyl acetamide, dimethyl formamide, N-methyl-2-pyrrolidone, cyclohexane, isopropyl alcohol, or two or more of them.

Advantageous Effects

The separator for an electrochemical device according to the present disclosure has a high meltdown temperature, while showing improved adhesion, and shows a low shrinkage at a high temperature to realize excellent heat resistance and dimensional stability.

Therefore, there is provided an effect of improving the high-temperature safety of a battery obtained by using the separator according to the present disclosure.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.

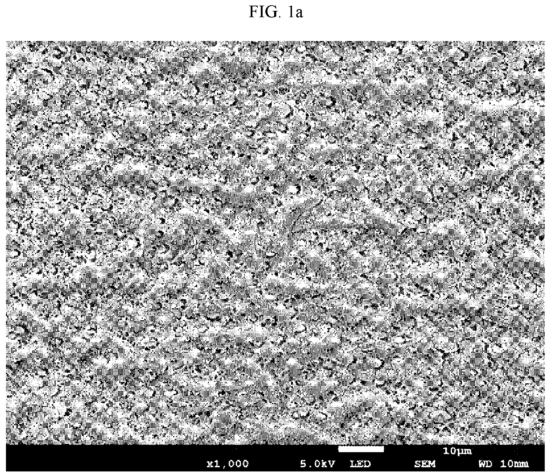

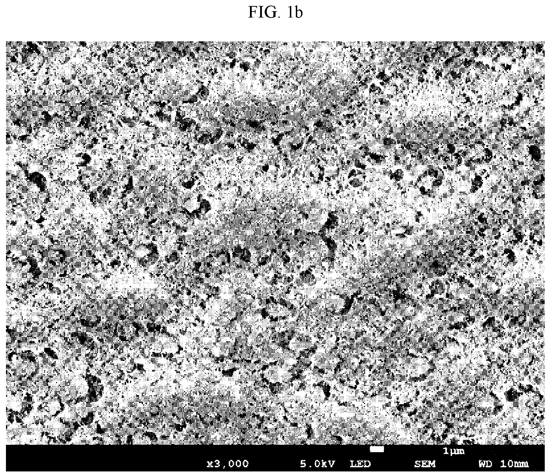

FIG. 1 is a scanning electron microscopic (SEM) image of the separator according to Example 1. Particularly, FIG. 1a and FIG. 1b are SEM images illustrating the section of the separator observed at a magnification of 1000X and 3000X, respectively.

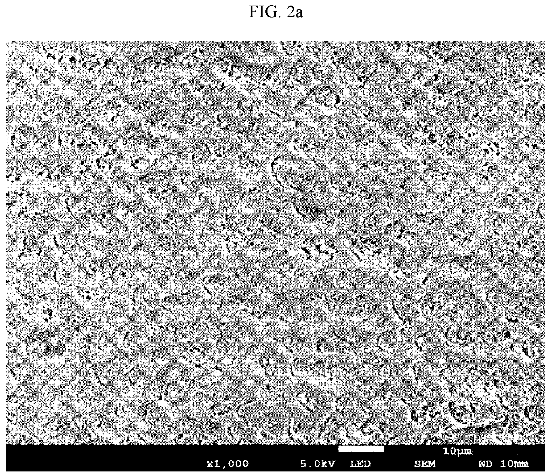

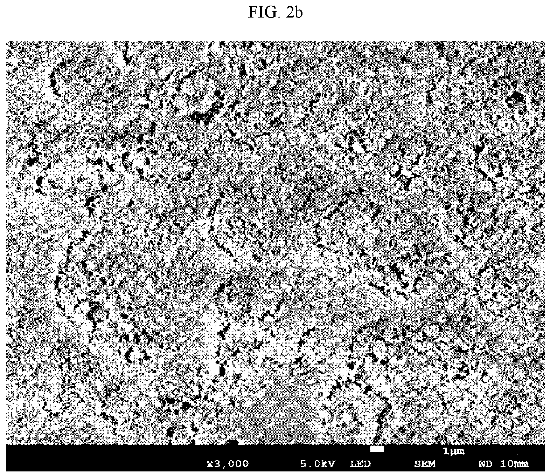

FIG. 2 is a scanning electron microscopic (SEM) image of the separator according to Example 2. Particularly, FIG. 2a and FIG. 2b are SEM images illustrating the section of the separator observed at a magnification of 1000X and 3000X, respectively.

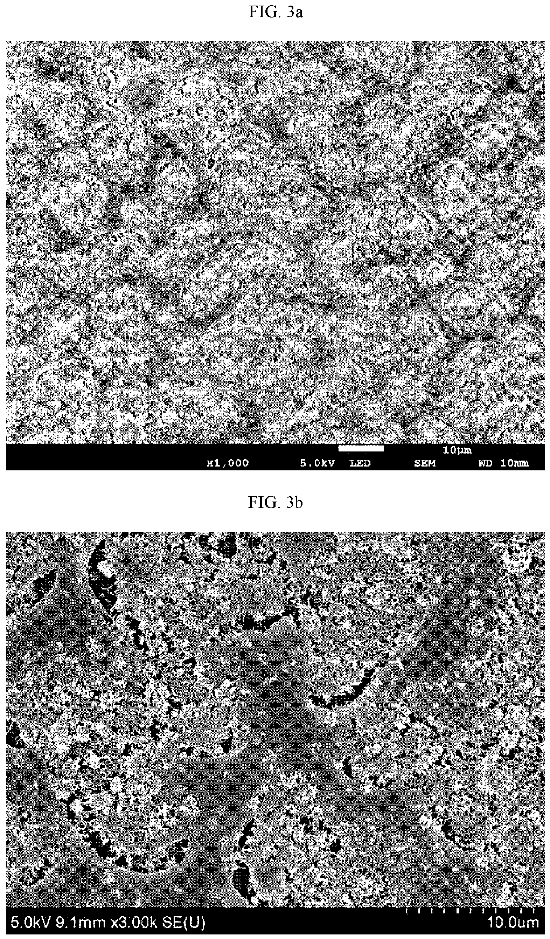

FIG. 3 is a scanning electron microscopic (SEM) image of the separator according to Example 3. Particularly, FIG. 3a and FIG. 3b are SEM images illustrating the section of the separator observed at a magnification of 1000X and 3000X, respectively.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Throughout the specification, the expression 'a part includes an element' does not preclude the presence of any additional elements but means that the part may further include the other elements.

As used herein, the terms 'about', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression 'A and/or B' means 'A, B or both of them'.

In one aspect of the present disclosure, there is provided a separator for an electrochemical device, including a polymer porous support, and an inorganic composite porous layer formed on at least one surface of the porous support,

wherein the inorganic composite porous layer includes a binder polymer and an inorganic filler,
the binder polymer includes a first binder polymer and a second binder polymer,
the weight ratio of the first binder polymer to the second binder polymer is 6:4-9: 1,
the first binder polymer is an amorphous polymer having a glass transition temperature (Tg) of 180°C or higher,
the second binder polymer is a polyvinylidene fluoride-based copolymer containing a first repeating unit derived from vinylidene fluoride (VdF) and a second repeating unit derived from hexafluoropropylene (HFP), and
the content of the second repeating unit is 4-40 wt% based on the total weight of the polyvinylidene fluoride-based copolymer.

According to an embodiment of the present disclosure, the polymer porous support is not particularly limited, as long as it has a porous structure. For example, the polymer porous support may be a porous polymer substrate, particularly, a porous polymer film substrate or a porous polymer nonwoven substrate.

Particular examples of the porous polymer substrate include a porous polymer film made of polyolefin, such as polyethylene or polypropylene. For example, the porous polymer film substrate made of polyolefin may be one realizing a shut-down function at a temperature of 80-130°C.

Herein, the porous polymer film may be formed of polyolefin, such as polyethylene (e.g. high-density polyethylene, linear low-density polyethylene, low-density polyethylene or ultrahigh-molecular weight polyethylene), polypropylene, polybutylene or polypentene, alone or a combination thereof, or a derivative thereof.

Typical examples of commercially available porous polymer films made of polyolefin, which may be used as such polymer porous supports, include wet polyethylene-based films (Asahi-Kasei E-Materials, Toray, SK IE Technology, Shanghai Energy, Sinoma, Entek), dry polypropylene-based films (Shenzhen Senior, Cangzhou Mingzhu), dry polypropylene/polyethylene multilayer structure-based films (Polypore, Ube), or the like, but are not limited thereto.

In addition, the porous polymer film substrate may be obtained by molding various polymers, such as polyester, other than polyolefin into the shape of a film. Further, the porous polymer film substrate may be formed to have a laminate structure having two or more film layers. Herein, each film layer may include a polymer, such as the above-mentioned polyolefin, polyester, or the like, alone or in combination.

Besides the polyolefin, the porous polymer film substrate and the porous nonwoven substrate may be formed of polyester, e.g., polyethylene terephthalate, polybutylene terephthalate, polyethylene naphthalate, polyacetal, polyamide, polycarbonate, polyimide, polyetheretherketone, polyethersulfone, polyphenylene oxide, polyphenylene sulfide, or the like, alone or in combination.

There is no particular limitation in the thickness of the polymer porous support, but the polymer porous support may have a thickness of 1 $\mu$m or more, 3 $\mu$m or more, 15 $\mu$m or less, or 10 $\mu$m or less. When the thickness satisfies the above-defined range, it is possible to improve the problem of the polymer porous support functioning as a resistance layer, while maintaining the mechanical properties.

The pore size and porosity of the polymer porous support are not particularly limited, but the polymer porous support may have a porosity of 10-95% and a pore size (diameter) of 0.1-50 $\mu$m. When the pore size and porosity satisfy the above-defined ranges, it is possible to prevent the polymer porous support from functioning as a resistance layer and to allow the polymer porous support to maintain its mechanical properties. In addition, the polymer porous support may have a shape of fibers or membrane.

The inorganic composite porous layer is disposed on one side of the polymer porous support, and includes a binder polymer and an inorganic filler.

In addition, the inorganic composite porous layer is a layer forming the separator and functions as an isolation layer preventing a short-circuit between a positive electrode and a negative electrode, while preventing the polymer porous support from being in direct contact with lithium metal.

In the inorganic composite porous layer, the inorganic filler particles are bound to one another by the binder polymer, while they are packed and are in contact with one another, thereby forming interstitial volumes among the inorganic filler particles, and the interstitial volumes among the inorganic filler particles become vacant spaces to form pores. In other words, the binder polymer attaches the inorganic filler particles to one another so that they may retain their binding states, and for example, the binder polymer connects the inorganic filler particles with one another and fixes them. In addition, the pores of the inorganic composite porous layer are those formed by the interstitial volumes among the inorganic filler particles which become vacant spaces, wherein the spaces are defined by the inorganic filler particles facing each other substantially in a closely packed or densely packed structure of the inorganic filler particles.

The inorganic filler also functions as a spacer which allows formation of the vacant spaces among the inorganic filler particles to form micropores and can retain a physical shape, and generally undergoes no change in physical properties in nature even at a high temperature of 200°C or higher, and thus the resultant organic/inorganic composite porous film has excellent heat resistance.

Therefore, in a lithium secondary battery including the separator, it is less likely that both electrodes cause a complete short-circuit by virtue of the inorganic composite porous layer, even when the polymer porous support is broken in the battery under a severe condition caused by internal or external factors, such as high temperature, overcharge, external impact, or the like. If any short-circuit occurs, it is possible to inhibit the short-circuit zone from expanding, and thus it is possible to contribute to the improvement of the safety of the battery.

According to an embodiment of the present disclosure, the inorganic composite porous layer may have a porosity of 70% or more. Particularly, the porosity of the inorganic composite porous layer may be determined by the composition of the inorganic composite porous layer, but may be 70-85%, or 75-83%. When the porosity satisfies the above-defined range, it is possible to provide an effect of reducing resistance.

The inorganic composite porous layer may have a thickness of 1 $\mu$m or more, 3 $\mu$m or more, 50 $\mu$m or less, 30 $\mu$m or less, or 20 $\mu$m or less.

There is no particular limitation in the inorganic filler, as long as it is electrochemically stable. In other words, there is no particular limitation in the inorganic filler, as long as it causes no oxidation and/or reduction in the range (e.g. 0-5 V based on Li/Li$^+$) of operating voltage of an applicable electrochemical device. Particular examples of the inorganic filler include alumina ($Al_2O_3$), fumed alumina, aluminum hydroxide ($Al(OH)_3$), magnesium hydroxide ($Mg(OH)_2$), boehmite (AlOOH), or a mixture of two or more of them. Particularly, alumina ($Al_2O_3$) may be used.

The inorganic filler may have an average particle diameter ($D_{50}$) of 20-700 nm in order to form an inorganic composite porous layer having a uniform thickness and to provide the inorganic composite porous layer with a suitable level of porosity. Particularly, the inorganic filler may have an average particle diameter of 100-500 nm. When the average particle diameter ($D_{50}$) of the inorganic filler satisfies the above-defined range, it is possible for the slurry for an inorganic composite porous layer to maintain its dispersibility to allow easy control of the physical properties of the separator. It is also possible to prevent the problem of degradation of the mechanical properties, caused by an excessive increase in the thickness of the separator, and the problem of generation of an internal short-circuit during the charge/discharge of a battery, caused by an excessively large pore size. In addition, the packing density may be increased to improve the heat shrinkage, and the above-defined range of particle size may provide high heat resistance.

According to the present disclosure, the average particle diameter ($D_{50}$) of the inorganic filler may be defined as the particle diameter at the point of 50% in the particle diameter distribution. The average particle diameter ($D_{50}$) of the inorganic filler according to the present disclosure may be determined through the observation with electron microscopy using scanning electron microscopy (SEM), field emission scanning electron microscopy (FE-SEM), or the like, or by using the laser diffraction method. Particularly, in the case of the laser diffraction method, the inorganic filler is dispersed in a dispersion medium and introduced to a commercially available laser diffraction particle size analyzer (e.g. Microtrac MT 3000), about 28 kHz of ultrasonic waves are irradiated thereto at an output of 60 W, and then the average particle diameter ($D_{50}$) may be calculated at the point of 50% in the particle diameter distribution determined by the analyzer system.

In addition, the inorganic filler may be primary particles as single particles, or secondary particles formed by aggregation of the primary particles.

The content of the inorganic filler is not particularly limited, but may be 50 wt% or more, 60 wt% or more, 95 wt% or less, 97 wt% or less, or 99 wt% or less, based on 100 wt% of the total weight of the inorganic composite porous layer. In other words, the weight ratio of the inorganic filler to the binder polymer may be 50:50 or higher, 60:40 or higher, 70:30 or higher, 95:5 or lower, 97:3 or lower, or 99:1 or lower, or may be 50:50-99:1, particularly 60:40-97:3, and more particularly 70:30-95:5. When the content of the inorganic filler satisfies the above-defined range, it is possible to prevent the problem of a decrease in pore size and porosity of the resultant inorganic composite porous layer, caused by an excessive increase in content of the binder polymer. It is also possible to solve the problem of a decrease in adhesion among the inorganic filler particles and degradation of the peeling resistance of the resultant inorganic composite porous layer, caused by a decrease in content of the binder polymer.

The binder polymer includes a first binder polymer and a second binder polymer. Preferably, the binder polymer may substantially consist of the first binder polymer and the second binder polymer. Herein, the term 'substantially' means that the binder polymer inevitably includes an ultralow amount or a trace amount of impurities or other ingredients due to the preparation process, but such impurities or other ingredients have no significant effect upon the objects to be accomplished by the present disclosure.

The first binder polymer is an amorphous polymer having a glass transition temperature (Tg) of 180°C or higher. Particularly, the first binder polymer may be an amorphous polymer having a glass transition temperature (Tg) of 180-350°C. Particular examples of the amorphous polymer include polyimide (PI), polyamideimide (PAI), polyetherimide (PEI), polyphenylsulfone (PPSU), polyethersulfone (PES), polysulfone (PSU), or two or more of them, but are not limited thereto. Particularly, among the amorphous binder polymers, polyimide has a glass transition temperature of about 250-340°C, polyamideimide has a glass transition temperature of about 280-290°C, polyetherimide has a glass transition temperature of about 217°C, polyphenylsulfone has a glass transition temperature of about 222°C, polyethersulfone has a glass transition temperature of about 230°C, and polysulfone has a glass transition temperature of about 185°C.

The second binder polymer is a polyvinylidene fluoride-based copolymer containing a first repeating unit derived from vinylidene fluoride (VdF) and a second repeating unit derived from hexafluoropropylene (HFP). Preferably, the second binder polymer may be a polyvinylidene fluoride-based copolymer substantially consisting of the first repeating unit and the second repeating unit.

The content of the second repeating unit is 4-40 wt%, particularly 4-15 wt%, based on the total weight of the polyvinylidene fluoride-based copolymer. When the content of the second repeating unit is smaller than the above-defined range, there are problems in that it is difficult to control the process due to the low solubility to a solvent, and the binding force in the coating layer is reduced due to a rapid phase separation rate. In addition, when the content of the second repeating unit is larger than the above-defined range, realization of the phase separation characteristics is problematic due to the high solubility of a solvent. Therefore, it is advantageous in terms of the adhesion to an electrode to satisfy the above-defined range of content of the second repeating unit.

According to the present disclosure, the weight ratio of the first binder polymer to the second binder polymer is 6:4-9: 1, particularly 6:4-7:3.

When the weight ratio of the first binder polymer to the second binder polymer satisfies the above-defined range according to the present disclosure, there is an advantage in terms of the adhesion and voltage resistance characteristics. For example, when the content of the first binder polymer does not fall within the above-defined range, the problem of poor heat resistance and voltage resistance characteristics may occur.

If necessary, the inorganic composite porous layer may further include, as an ingredient of the inorganic composite porous layer, an additive, such as a dispersant, flame retardant, or the like, other than the binder resin and the inorganic filler.

According to an embodiment of the present disclosure, the inorganic composite porous layer may further include a dispersant in an amount of 3 parts by weight or less based on 100 parts by weight of the inorganic composite porous layer. Herein, the dispersant may be polyvinyl pyrrolidone (PVP). When the inorganic composite porous layer includes such a dispersant, the dispersant may provide the first binder polymer with increased hydrophilicity and may contribute to the dispersibility of the inorganic filler. In addition, in this case, the inorganic composite porous layer may have increased binding force to the polymer porous support.

In another aspect of the present disclosure, there is provided a method for manufacturing the separator for an electrochemical device according to an embodiment of the present disclosure, including the steps of:

(S1) preparing a polymer porous support;
(S2) applying a slurry containing a binder polymer, an inorganic filler and a solvent to at least one surface of the polymer porous support; and
(S3) dipping the polymer porous support coated with the slurry in a composition containing a non-solvent, followed by drying, to form an inorganic composite porous layer,
wherein the binder polymer includes a first binder polymer and a second binder polymer,
the weight ratio of the first binder polymer to the second binder polymer is 6:4-9: 1,
the first binder polymer is an amorphous polymer having a glass transition temperature (Tg) of 180°C or higher,
the second binder polymer is a polyvinylidene fluoride-based copolymer containing a first repeating unit derived from vinylidene fluoride (VdF) and a second repeating unit derived from hexafluoropropylene (HFP), and
the content of the second repeating unit is 4-40 wt% based on the total weight of the polyvinylidene fluoride-based copolymer.

When applying the inorganic filler to the inorganic composite porous layer, the slurry may be prepared by dissolving the binder polymer in a solvent (which may be a dispersion medium for the inorganic filler), adding the inorganic filler thereto, and dispersing the inorganic filler. Particularly, according to an embodiment of the present disclosure, the slurry may be prepared by dissolving the binder polymer including the first binder polymer and the second binder polymer in an organic solvent, adding the inorganic filler thereto, and dispersing the inorganic filler. Herein, the inorganic filler may be added after being pulverized into a suitable size. In a variant, the inorganic filler may be added to a solution of the binder polymer, and then pulverized and dispersed by using a ball milling process, or the like.

The solvent may have a solubility parameter similar to the solubility of the binder polymer and a low boiling point. This is because such a solvent allows homogeneous mixing and may be removed with ease subsequently. Particular examples of the solvent include at least one compound selected independently from acetone, tetrahydrofuran, methylene chloride, chloroform, dimethyl acetamide, dimethyl formamide, N-methyl-2-pyrrolidone, cyclohexane, methanol, ethanol, isopropyl alcohol and water, or a mixture of two or more of them.

Herein, the solvent may function as a solvent capable of dissolving the binder polymer, or as a dispersion medium capable of dispersing the binder polymer, depending on the particular type of the binder polymer to be mixed in combination therewith.

According to an embodiment of the present disclosure, methods for applying the slurry for coating to the polymer porous support may be classified into pre-metering methods and post-metering methods. The pre-metering methods include predetermining the coating amount and introducing the slurry, and particular examples thereof include slot die coating, gravure coating, or the like. The post-metering methods include applying the slurry as a coating solution to the polymer porous support in a sufficient coating amount and raking out the slurry to a predetermined amount, and particular examples thereof include bar coating, or the like. In addition to the above-mentioned methods, there is direct metering coating including a combination of the pre-metering method with the post-metering method.

The slurry for coating may be applied by any non-limiting method, including the above-mentioned methods, and then the polymer porous support coated with the slurry for coating may be dipped in a composition containing a non-solvent to cause phase separation, thereby forming an inorganic composite porous layer.

According to an embodiment of the present disclosure, the non-solvent may be an aqueous solvent, or a mixture of an aqueous solvent with an organic solvent. Particular examples of the non-solvent include water, methanol, ethanol, propyl alcohol, butyl alcohol, butanediol, ethylene glycol, propylene glycol, tripropylene glycol, acetone, tetrahydrofuran, methylene chloride, chloroform, dimethyl acetamide, dimethyl formamide, N-methyl-2-pyrrolidone, cyclohexane, isopropyl alcohol, or two or more of them. Particularly, the non-solvent may include a mixture of water with N-methyl-2-pyrrolidone or a mixture of water with dimethyl acetamide.

In still another aspect of the present disclosure, there is provided an electrochemical device including a positive electrode, a negative electrode and a separator interposed between the positive electrode and the negative electrode, wherein the separator is the above-described separator according to an embodiment of the present disclosure.

The electrodes used in combination with the separator according to the present disclosure are not particularly limited, and may be obtained by allowing electrode active materials to be bound to an electrode current collector through a method generally known in the art.

Among the electrode active materials, non-limiting examples of the positive electrode active material include conventional positive electrode active materials that may be used for the positive electrodes for conventional electrochemical devices. Particularly, lithium manganese oxides, lithium cobalt oxides, lithium nickel oxides, lithium iron oxides or lithium composite oxides containing a combination thereof may be used.

Non-limiting examples of the negative electrode active material include conventional negative electrode active materials that may be used for the negative electrodes for conventional electrochemical devices. Particular examples of the negative electrode active material include lithium-intercalating materials, such as lithium metal or lithium alloys, carbon, petroleum coke, activated carbon, graphite or other carbonaceous materials.

Non-limiting examples of the positive electrode current collector include foil made of aluminum, nickel or a combination thereof. Non-limiting examples of the negative electrode current collector include foil made of copper, gold, nickel, copper alloys or a combination thereof.

The electrolyte that may be used in the electrochemical device according to the present disclosure is a salt having a structure of $A^+B^-$, wherein $A^+$ includes an alkali metal cation such as $Li^+$, $Na^+$, $K^+$ or a combination thereof, and $B^-$ includes an anion such as $PF_6^-$, $BF_4^-$, $Cl^-$, $Br^-$, $I^-$, $ClO4^-$, $AsF_6^-$, $CH_3CO_2^-$, $CF_3SO_3^-$, $N(CF_3SO_2)_2^-$, $C(CF_2SO_2)_3^-$ or a combination thereof, the salt being dissolved or dissociated in an organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone ($\gamma$-butyrolactone) or a combination thereof. However, the present disclosure is not limited thereto.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

In yet another aspect, the present disclosure provides a battery module which includes a battery including an electrode assembly as a unit cell, a battery pack including the battery module, and a device including the battery pack as an electric power source. Particular examples of the device include, but are not limited to: power tools driven by the power of an electric motor; electric cars, including electric vehicles (EVs), hybrid electric vehicles (HEVs), plug-in hybrid electric vehicles (PHEVs), or the like; electric two-wheeled vehicles, including E-bikes and E-scooters; electric golf carts; electric power storage systems; or the like.

MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

**Examples**

The separator according to each of Examples and Comparative Examples was obtained as follows.

**Example 1**

Polyetherimide (PEI, weight average molecular weight 128,000) and PVdF-HFP (content of HFP-derived repeating unit: 4.4 wt%, weight average molecular weight: 744,000) were dissolved in N-methyl-2-pyrrolidone (NMP) as an organic solvent, and $Al_2O_3$ as an inorganic filler having an average particle diameter of 20 nm was dispersed therein to prepare a slurry. The weight ratio of PEI:PVdF-HFP was 6:4, and the weight ratio of PEI and PVdF-HFP:inorganic particles was 4:6. Herein, the slurry had a solid content of 12%.

The resultant slurry was applied to both surfaces of a polyethylene porous support (thickness 6.5 $\mu$m, porosity 37%), and introduced to a water-containing solidifying bath for the purpose of non-solvent induced phase separation (NIPS), followed by drying. After drying, the inorganic composite porous layer had a porosity of 81.4%.

**Examples 2-4 and Comparative Examples 1 and 2**

Each separator was obtained in the same manner as Example 1, except that the composition of the slurry was changed as shown in the following Table 1.

Evaluation of Physical Properties of Separator

Evaluation of the physical properties of the separator according to each of Examples and Comparative Examples was carried out as follows. The results are shown in the following Table 1.

[Table 1]

| | Meltdown temperature (°C) | Heat shrinkage at 150°C (%) (MD/TD) | Adhesion (gf/25mm) | Porosity of inorganic composite porous layer (%) | Thickness of separator ($\mu$m) | Weight ratio of first binder (PEI): Second binder (PVdF-HFP) | Weight ratio of binder (PEI and PVdF-HFP): inorganic filler | Content of second repeating unit of second binder polymer (wt%) |
|---|---|---|---|---|---|---|---|---|
| Ex. 1 | 153 | 32/25 | 32.3 | 81.4 | 12.0 | 6:4 | 4:6 | 4.4 |
| Ex. 2 | 160 | 31/25 | 25.7 | 81.1 | 11.8 | 7:3 | 3.5:6.4 | 4.4 |
| Ex. 3 | 152 | 46/34 | 47.5 | 78.5 | 10.7 | 8.6:1.4 | 6:4 | 6 |
| Ex. 4 | 155 | 43/30 | 52.4 | 77.0 | 10.5 | 6:4 | 4:6 | 15 |
| Comp. Ex. 1 | 158 | 30/28 | 15.0 | 72.5 | 10.5 | 9.5:0.5 | 4:6 | 30 |
| Comp. Ex. 2 | 240 | 0/0 | X | 0 | 10.0 | 10:0 | 10:0 | - |

(1) Determination of Meltdown Temperature

A separator having a length of 10 mm was introduced to a TMA ( thermomechanical analysis) device (TA Instrument, Q400) and exposed to a temperature-increasing condition (a rate of 5°C/min starting from 30°C), while applying a tension of 19.6 mN thereto. As the temperature was increased, the sample showed a change in length. Then, the temperature at which point the sample was broken after a rapid increase in length was measured. The meltdown temperature was defined as the temperature at this point and measured in each of the machine direction (MD) and the transverse direction (TD).

(2) Method for Determining Porosity of Inorganic Composite Porous Layer

The separator according to each of Examples and Comparative Examples was evaluated in terms of the porosity of the inorganic composite porous layer.

The porosity was determined by measuring the width, length and thickness of the separator to calculate the volume, measuring the weight, and calculating a ratio of the volume based on the volume 100% of which is occupied by the separator.

$$\text{Porosity (\%)} = \{(\text{real volume}) / (\text{compact volume})\} / (\text{real volume}) \text{ X } 100$$

$$\text{Compact volume} = \text{loading amount} / \text{density}$$

$$\text{Real volume} = \text{Thickness of separator}$$

(3) Evaluation of Heat Shrinkage

A separator cut into a size of 5 cm x 5 cm was stored in a convection oven at 150°C for 30 minutes, and a change in length was determined in each of MD and TD.

$$\text{Heat shrinkage (\%)} = \{(\text{dimension before shrinking - dimesnion after shrinking}) / \text{dimension before shrinking}\} \text{ X } 100$$

(4) Evaluation of Adhesion

An active material [natural graphite and artificial graphite (weight ratio 5:5)], a conductive material [Super P] and a binder [polyvinylidene fluoride (PVdF)] were mixed at a weight ratio of 92:2:6, the resultant mixture was dispersed in water to prepare a slurry, the slurry was coated on copper foil to obtain a negative electrode, and the negative electrode was cut into a size of 25 mm x 70 mm.

Each separator according to each of Examples and Comparative Examples was cut into a size of 25 mm x 70 mm. The prepared separator was laminated with the negative electrode, the resultant structure was inserted between PET films having a thickness of 100 $\mu$m, and the separator and the negative electrode were allowed to adhered to each other by using a flat press. Herein, the flat press was heated at 60°C for 1 second under a pressure of 6.5 MPa.

The end portion of the adhered separator and negative electrode was mounted to a UTM instrument (Instron Co.), and force was applied thereto at 180° at a rate of 300 mm/min. Then, the force required for separating the negative electrode and the separator adhered thereto from each other was measured.

**Claims**

1. A separator for an electrochemical device, comprising a polymer porous support, and an inorganic composite porous layer formed on at least one surface of the porous support,

   wherein the inorganic composite porous layer comprises a binder polymer and an inorganic filler,
   the binder polymer comprises a first binder polymer and a second binder polymer,
   the weight ratio of the first binder polymer to the second binder polymer is 6:4-9: 1,
   the first binder polymer is an amorphous polymer having a glass transition temperature (Tg) of 180°C or higher,
   the second binder polymer is a polyvinylidene fluoride-based copolymer containing a first repeating unit derived from vinylidene fluoride (VDF) and a second repeating unit derived from hexafluoropropylene (HFP), and
   the content of the second repeating unit is 4-40 wt% based on the total weight of the polyvinylidene fluoride-based copolymer.

2. The separator for an electrochemical device according to claim 1, wherein the weight ratio of the first binder polymer to the second binder polymer is 6:4-7:3.

3. The separator for an electrochemical device according to claim 1, wherein the content of the second repeating unit is 4-15 wt% based on the total weight of the polyvinylidene fluoride-based copolymer.

4.  The separator for an electrochemical device according to claim 1, wherein the inorganic composite porous layer has a porosity of 70% or more.

5.  The separator for an electrochemical device according to claim 1, wherein the first binder polymer comprises polyimide (PI), polyamideimide (PAI), polyetherimide (PEI), polyphenylsulfone (PPSU), polyethersulfone (PES), polysulfone (PSU), or two or more of them.

6.  The separator for an electrochemical device according to claim 1, wherein the inorganic filler is primary particles having an average particle diameter of 20-700 nm.

7.  The separator for an electrochemical device according to claim 1, wherein the inorganic filler comprises alumina ($Al_2O_3$), fumed alumina, aluminum hydroxide ($Al(OH)_3$), magnesium hydroxide ($Mg(OH)_2$), boehmite (AlOOH), or two or more of them.

8.  The separator for an electrochemical device according to claim 1, wherein the inorganic composite porous layer further comprises a dispersant in an amount of 3 parts by weight or less based on 100 parts by weight of the inorganic composite porous layer.

9.  The separator for an electrochemical device according to claim 8, wherein the dispersant is polyvinyl pyrrolidone (PVP).

10. An electrochemical device comprising a positive electrode, a negative electrode and a separator interposed between the positive electrode and the negative electrode, wherein the separator is the separator for an electrochemical device as defined in any one of claims 1 to 9.

11. The electrochemical device according to claim 10, which is a lithium secondary battery.

12. A method for manufacturing the separator for an electrochemical device as defined in claim 1, comprising the steps of:

    (S1) preparing a polymer porous support;
    (S2) applying a slurry containing a binder polymer, an inorganic filler and a solvent to at least one surface of the polymer porous support; and
    (S3) dipping the polymer porous support coated with the slurry in a composition containing a non-solvent, followed by drying, to form an inorganic composite porous layer,
    wherein the binder polymer comprises a first binder polymer and a second binder polymer,
    the weight ratio of the first binder polymer to the second binder polymer is 6:4-9:1,
    the first binder polymer is an amorphous polymer having a glass transition temperature (Tg) of 180°C or higher,
    the second binder polymer is a polyvinylidene fluoride-based copolymer containing a first repeating unit derived from vinylidene fluoride (VDF) and a second repeating unit derived from hexafluoropropylene (HFP), and
    the content of the second repeating unit is 4-40 wt% based on the total weight of the polyvinylidene fluoride-based copolymer.

13. The method for manufacturing the separator for an electrochemical device according to claim 12, wherein the solvent is an organic solvent.

14. The method for manufacturing the separator for an electrochemical device according to claim 12, wherein the non-solvent comprises water, methanol, ethanol, propyl alcohol, butyl alcohol, butanediol, ethylene glycol, propylene glycol, tripropylene glycol, acetone, tetrahydrofuran, methylene chloride, chloroform, dimethyl acetamide, dimethyl formamide, N-methyl-2-pyrrolidone, cyclohexane, isopropyl alcohol, or two or more of them.

FIG. 1a

x1,000   5.0kV   LED   SEM   WD 10mm   10μm

FIG. 1b

x3,000    5.0kV  LED      SEM      WD 10mm

FIG. 2a

FIG. 2b

FIG. 3a

FIG. 3b

## INTERNATIONAL SEARCH REPORT

International application No.

**PCT/KR2023/001222**

### A. CLASSIFICATION OF SUBJECT MATTER

**H01M 50/409**(2021.01)i; **H01M 50/403**(2021.01)i; **H01M 50/446**(2021.01)i; **H01M 50/449**(2021.01)i; **H01M 10/052**(2010.01)i

According to International Patent Classification (IPC) or to both national classification and IPC

### B. FIELDS SEARCHED

Minimum documentation searched (classification system followed by classification symbols)

H01M 50/409(2021.01); H01G 11/52(2013.01); H01M 10/052(2010.01); H01M 50/40(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 분리막(separator), 무기입자(inorganic particle), 비닐리덴플루오라이드 (Vinylidene Fluoride), 헥사플루오로프로필렌(Hexafluoropropylene)

### C. DOCUMENTS CONSIDERED TO BE RELEVANT

| Category* | Citation of document, with indication, where appropriate, of the relevant passages | Relevant to claim No. |
|---|---|---|
| X | KR 10-2019-0092307 A (LG CHEM, LTD.) 07 August 2019 (2019-08-07)<br>See paragraphs [0091]-[0096], claims 1-4 and 11-15 and figure 2. | 1-7,10-14 |
| Y | | 8-9 |
| Y | KR 10-2021-0060238 A (LG ENERGY SOLUTION, LTD.) 26 May 2021 (2021-05-26)<br>See abstract and claim 1. | 8-9 |
| A | KR 10-2020-0036803 A (LG CHEM, LTD.) 07 April 2020 (2020-04-07)<br>See claims 1-3. | 1-14 |
| A | KR 10-2021-0079234 A (LG ENERGY SOLUTION, LTD.) 29 June 2021 (2021-06-29)<br>See claims 10 and 14. | 1-14 |
| A | KR 10-2017-0055358 A (LG CHEM, LTD.) 19 May 2017 (2017-05-19)<br>See claims 1-4. | 1-14 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 May 2023** | **19 May 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/001222**

| Patent document cited in search report | | | Publication date (day/month/year) | Patent family member(s) | | | Publication date (day/month/year) |
|---|---|---|---|---|---|---|---|
| KR | 10-2019-0092307 | A | 07 August 2019 | None | | | |
| KR | 10-2021-0060238 | A | 26 May 2021 | CN | 114730960 | A | 08 July 2022 |
| | | | | EP | 4050720 | A1 | 31 August 2022 |
| | | | | EP | 4050720 | A4 | 30 November 2022 |
| | | | | US | 2022-0407181 | A1 | 22 December 2022 |
| | | | | WO | 2021-101221 | A1 | 27 May 2021 |
| KR | 10-2020-0036803 | A | 07 April 2020 | CN | 111566843 | A | 21 August 2020 |
| | | | | CN | 111566843 | B | 24 January 2023 |
| | | | | EP | 3764426 | A1 | 13 January 2021 |
| | | | | EP | 3764426 | A4 | 26 May 2021 |
| | | | | KR | 10-2364467 | B1 | 17 February 2022 |
| | | | | US | 2021-0098847 | A1 | 01 April 2021 |
| | | | | WO | 2020-067845 | A1 | 02 April 2020 |
| KR | 10-2021-0079234 | A | 29 June 2021 | CN | 114868301 | A | 05 August 2022 |
| | | | | EP | 4071915 | A1 | 12 October 2022 |
| | | | | US | 2023-0036332 | A1 | 02 February 2023 |
| | | | | WO | 2021-125916 | A1 | 24 June 2021 |
| KR | 10-2017-0055358 | A | 19 May 2017 | KR | 10-1985260 | B1 | 03 June 2019 |

Form PCT/ISA/210 (patent family annex) (July 2022)

**EP 4 468 501 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220011687